(19) Europäisches Patentamt
European Patent Office
Office européen des brevets

(11) **EP 1 646 515 B1**

(12) **EUROPÄISCHE PATENTSCHRIFT**

(45) Veröffentlichungstag und Bekanntmachung des Hinweises auf die Patenterteilung:
**05.01.2011 Patentblatt 2011/01**

(21) Anmeldenummer: **04741975.9**

(22) Anmeldetag: **08.07.2004**

(51) Int Cl.:
*B60C 23/06* (2006.01)    *B60C 23/00* (2006.01)

(86) Internationale Anmeldenummer:
**PCT/EP2004/051403**

(87) Internationale Veröffentlichungsnummer:
**WO 2005/005174 (20.01.2005 Gazette 2005/03)**

(54) **VERFAHREN ZUR ERMITTLUNG DES INNENDRUCKS EINES FAHRZEUGREIFENS**

METHOD FOR DETERMINING INTERNAL PRESSURE OF A VEHICLE TYRE

PROCEDES POUR DETERMINER LA PRESSION INTERIEURE D'UN PNEU DE VEHICULE

(84) Benannte Vertragsstaaten:
**DE FR IT**

(30) Priorität: **08.07.2003 DE 10331585**

(43) Veröffentlichungstag der Anmeldung:
**19.04.2006 Patentblatt 2006/16**

(73) Patentinhaber: **Continental Teves AG & Co. oHG 60488 Frankfurt am Main (DE)**

(72) Erfinder:
• **KÖBE, Andreas 64625 Bensheim (DE)**
• **BEHRENDS, Holger 30175 Hannover (DE)**
• **GOOTJES, Lennert 30451 Hannover (DE)**
• **KOHN, Joachim 90491 Nürnberg (DE)**
• **RUNGE, Ines 30543 Hannover (DE)**
• **KLUGE, Stefan 59556 Lippstadt (DE)**
• **DUCHOW, Alfred 31249 Hohenhameln (DE)**

(56) Entgegenhaltungen:
**EP-A- 0 699 546    EP-A- 0 891 904
DE-A- 4 009 540    DE-A- 10 157 885
US-A- 5 553 491**

EP 1 646 515 B1

**Beschreibung**

Die Erfindung betrifft ein Verfahren zur Ermittlung des Innendrucks, insbesondere des Minderdrucks des Reifens eines Kraftfahrzeuges im Fahrbetrieb durch Analyse des Eigenschwingverhaltens des Rades, wobei aus dem ermittelten Schwingungsspektrum die normierte Amplitude ermittelt wird und die Amplitudenmaxima der Resonanzfrequenz beobachtet werden.

Ein solches Verfahren ist beispielsweise aus der US 6,450,020 B1 bekannt. Die DE 101 57 858 A1 offenbart ein Verfahren zum Bestimmen des Reifenluftdrucks aus dem Fahrzeugbetrieb bei niedrigen und hohen Geschwindigkeiten, das unabhängig von verschiedenen, an dem Fahrzeug angebrachten Elementen bereitgestellt wird. Dieses Verfahren basiert auf einer Resonanzfrequenz, die auf der Grundlage eines Radgeschwindigkeitssignals extrahiert wurde, das über einen jedem Rad zugeordneten Geschwindigkeitssensor ausgegeben wurde. Die Bestimmung des Reifenluftdrucks basiert außerdem auf einem dynamischen Lastradius, der auf der Grundlage des Radgeschwindigkeitssignals abgeleitet wurde.

Die Stärke und Frequenzlage der beim Abrollen entstehenden Reifenschwingungen sind stark abhängig vom Innendruck des Reifens, der sowohl die Steifigkeit als auch die Dämpfung des Rades bestimmt. Diese Eigenschaften bestimmen auch, mit welcher Intensität und Frequenz die Felge zu Drehschwingungen angeregt wird. Die Drehschwingungen des Rades lassen sich beispielsweise mit einem ABS-Drehzahlsensor messen.

Am deutlichsten treten die Drehschwingungen bei den vom Innendruck abhängigen Resonanzfrequenzen auf.

Für einen möglichst wirtschaftlichen Betrieb eines Kraftfahrzeuges und zum Erreichen hoher Haltbarkeit müssen die Reifen mit einem vorgegebenen Luftdruck befüllt sein. Aufgrund von Diffusionsverlusten und Dichtungsverlusten im Reifen sinkt der Luftdruck stetig ab. Die entstehenden Leckageraten sind unvermeidlich und liegen typischerweise im Bereich einiger 100 mbar pro Jahr. Der Reifenluftdruck muss deshalb regelmäßig kontrolliert werden. Der durchschnittliche Kraftfahrer neigt jedoch dazu, dem Reifendruck keine oder zumindest nicht die angemessene Aufmerksamkeit zukommen zu lassen. Aus diesem Grund werden Kraftfahrzeuge zunehmend mit Reifendruckkontrollsystemen ausgerüstet, die den Luftdruck im Reifen kontinuierlich überwachen und eine Warnmeldung für den Fahrer abgeben, wenn der Reifendruck unter einen vorgegebenen Mindestdruck absinkt.

Es sind direkt messende Systeme bekannt, bei denen sich im Druckraum des Fahrzeugrades ein Sensor befindet, der den Druck misst. Das den ermittelten Reifeninnendruck auslesende Meßsystem wird in der Regel von einer Batterie versorgt und überträgt seine Messdaten über eine Funkstrecke. Nachteilig an diesem System ist neben der von der Batterielebensdauer abhängigen Funktionsfähigkeit auch die durch den Sensor und die Stromversorgung entstehende Unwucht an der Felge von bis zu 20 g.

Indirekt messende Systeme nutzen die sich einstellende Änderung im Abrollumfang eines Rades bei Luftdruckänderung im Reifen aus. Die Änderung des Abrollumfanges wird über die ABS-Sensoren ermittelt, die alle Räder eines Fahrzeuges gleichzeitig detektieren und entsprechende Daten auswerten. Diese Systeme haben den grundsätzlichen Nachteil, dass ein nahezu identischer Druckverlust in allen Reifen, wie er sich durch die Leckageverluste zwingend einstellt, nicht erkennbar ist.

Die JP 5-133 831 offenbart eine Vorrichtung zum Bestimmen des Innendrucks eines Fahrzeugreifens. In dieser Vorrichtung wird die Resonanzfrequenz des Reifens durch eine Frequenzanalyse ermittelt, die in Bezug auf ein Geschwindigkeitssignal des Rades einschließlich der Schwingungsfrequenz des Reifens durchgeführt wird. Der aktuelle Druck wird aus der ermittelten Resonanzfrequenz bestimmt. Die zur Bestimmung des Luftdrucks verwendete Resonanzfrequenz bewegt sich im Bereich von 30 - 50 Hz. Dieser Bereich ist ausreichend, wenn das Fahrzeug sich im unteren oder mittleren Geschwindigkeitsbereich befindet. Nimmt die Fahrzeuggeschwindigkeit zu, ist das Schwingungsverhalten eines Reifens schwer zu bewerten. Im Ergebnis sinkt das Spektrum der Resonanzfrequenz ab und verschlechtert damit die Aussagekraft in Bezug auf den Reifeninnendruck.

In der JP 8-219 920 ist eine Vorrichtung beschrieben, mit der mehrere Resonanzfrequenzen aus mehreren Frequenzbereichen, beispielsweise einem Bereich von 30 - 50 Hz und einem Bereich von 60 - 90 Hz ermittelt werden.

Dem Verfahren nach der gattungsgemäßen US 6,385,553 liegt die Erkenntnis zugrunde, dass das Radgeschwindigkeitssignal eines angetriebenen Rades eine Resonanzfrequenz höherer Ordnung enthält, die sich auch dann sehr stark mit der Veränderung des Reifeninnendruckes ändert, wenn die Fahrzeuggeschwindigkeit hoch ist. In dieser Druckschrift wird sehr ausführlich beschrieben, wie das Frequenzspektrum ermittelt und die interessierende Resonanzfrequenz mathematisch beispielsweise durch eine Fouriertransformation (FFT) ermittelt wird, so dass eine normierte Amplitude über der Frequenz aufgetragen werden kann.

Der Erfindung liegt die Aufgabe zugrunde, Verfahren anzugeben, mit denen die beispielsweise nach der US 6,385,553 ermittelte Resonanzfrequenz ausgewertet werden kann, um zu erkennen, ob der Reifeninnendruck eines beliebigen Rades des Fahrzeuges unter einen vorgegebenen Wert absinkt, um dem Fahrer ein entsprechendes Warnsignal zu geben.

Das erfindungsgemäße Auswerteverfahren zeichnet sich durch folgende Schritte aus:

a) Ermittlung und Aufzeichnung der Resonanzfrequenz des Rades mit einem vorgegebenen Soll-Druck,

b) Ermitteln und Speichern des maximalen Amplitudenwertes $a_{soll}$ bei Soll-Druck des Reifens,

c) kontinuierliches Ermitteln der Resonanzfrequenz des Rades im Fahrbetrieb,

d) kontinuierliches Ermitteln des maximalen Amplitudenwertes $a_{ist}$.

e) kontinuierliches Vergleichen der maximalen Amplitudenwerte $a_{soll}$ und $a_{ist}$ miteinander,

f) Erzeugen eines Signals, wenn die Abweichung von $a_{ist}$ zu $a_{soll}$ einen definierten Wert überschreitet.

Bei diesem Verfahren wird die normierte Amplitude zur Bestimmung des Luftdrucks verwendet.

Die Felgengeschwindigkeit wird zweckmäßigerweise über einen bereits vorhandenen ABS-Sensor aufgenommen, so dass kein zusätzlicher Sensor und kein zusätzlicher baulicher Aufwand betrieben werden muss, um die Eingangsgröße zu erhalten. Die Berechnung selbst wird in einer Auswerteeinheit, insbesondere einem Rechner ausgeführt.

Die Berechnung des Reifenluftdruckes erfolgt vorteilhafterweise unter Berücksichtigung der Betriebsparameter des Reifens, insbesondere der Reifentemperatur, da diese Einfluss auf die Eigenfrequenz der Drehschwingung hat, da sich über die Reifentemperatur die Steifigkeit und die Dämpfung des Luftreifens verändern, was wiederum Parameter sind, deren Veränderung die Eigenfrequenz beeinflussen.

Um die Eigenfrequenz der Felgendrehschwingung berechnen zu können, wird ein Reifenmodell verwendet, das vorab ermittelte Reifenparameter berücksichtigt, insbesondere werden die Rotationssteifigkeit und die Rotationsdämpfung des Reifens sowie das Trägheitsmoment des Reifens und der Felge als feststehende Größen des Reifens bzw. der Felge eingegeben. Bei einem Reifen- bzw. Felgenwechsel müssen entsprechend veränderte Parameter oder Kennwerte eingegeben und neue Vergleichswerte ermittelt werden. Das System muss bei einem Reifen- bzw. Felgenwechsel für Reifen anderer Dimension oder Bauart mit neuen Reifenparametern neu kalibriert werden.

Vorzugsweise wird das Signal erst erzeugt, wenn die Abweichung den definierten Wert über einen festgelegten Zeitraum, beispielsweise eine Minute, unterschreitet.

Die maximalen Amplitudenwerte $a_{soll}$ bei Soll-Druck werden vorzugsweise für einen speziellen Reifentyp extern ermittelt und auf einem mit dem Reifen verbindbaren Speichermedium gespeichert.

Das Speichermedium kann ein Transponder oder ein Barcode sein. Die Verwendung eines Speichermediums hat den Vorteil, dass die reifentypischen Charakteristika vom Reifenhersteller ermittelt werden können und bei einem Radwechsel etwa veränderte Daten einfach dem Fahrzeug zugeordnet werden können.

Über die Lage der maximalen Amplitudenwerte kann die Reifendimension erkannt werden. Dabei wird die Erkenntnis ausgenutze dass die Seitenwand eines Reifens für große Felgendurchmesser in der Regel niedriger ist als für Reifen mit kleinen Durchmessern. Je niedriger die Seitenwand ist, um so höher ist die Eigenfrequenz.

Vorzugsweise wird mit Hilfe eines Initialisierungsmittels am fahrenden Kraftfahrzeug eine von der Kraftfahrzeuggeschwindigkeit abhängige Kalibrierung durchgeführt.

Zur Ermittlung der normierten Amplitude erfolgt die Umrechnung vom Zeitbereich in den Frequenzbereich vorzugsweise über Tabellen.

Es hat sich als vorteilhaft herausgestellt, dass vor den beschriebenen Verfahren zur Ermittlung des Innendrucks eines Fahrzeugreifens zuerst systematische und stochastische Störungen aus dem Frequenzspektrum eliminiert werden sollten, damit diese Störungen nicht zu falschen Ergebnissen hinsichtlich eines Reifendruckverlusts führen.

Auch die Verwendung des erfindungsgemäßen Verfahren in einem direkt und/oder indirekt messenden Reifendrucküberwachungssystem ist im Hinblick auf die hierdurch erreichte erhöhte Sicherheit bzw. Redundanz vorteilhaft.

Bei der Auswertung der Frequenzkurve im Fahrbetrieb können durch die Last, die Temperatur, die Feuchtigkeit, den Umgebungsluftdruck und/oder die Fahrzeugbeschleunigung hervorgerufene Fremdeinflüsse kompensiert werden. Hierzu müssen natürlich entsprechende Sensoren vorgesehen sein.

Wenn entsprechende Sensoren vorgesehen sind, kann bei der Auswertung der Frequenzkurve im Fahrbetrieb auch die Profiltiefe, deren Veränderung durch den Verschleiß eine Veränderung der Resonanzfrequenz bewirkt, berücksichtigt werden.

Die vorstehend beschriebenen Verfahren können mit einem indirekten System zur Erkennung des Minderluftdrucks gekoppelt werden.

Die nachfolgenden Zeichnungen verdeutlichen die unterschiedlichen Auswerteverfahren.

Es zeigt:

Figur 1                    die Prinzipdarstellung der normierten Amplitude (logarithmisch aufgetragen) über der Frequenz;

Figur 2        Die Prinzipdarstellung der sich mit sinkendem Luft- druck verändernden Gradienten$\alpha$;

Figur 3        eine Darstellung der 3dB-Grenzfrequenzen an unter- schiedlichen Maxima der Amplitude;

Figur 4        die Prinzipdarstellung des steigenden Amplitudenma- ximums bei sinkendem Reifeninnendruck;

Figur 5        die prinzipielle Abhängigkeit der normierten Ampli- tude vom Reifenluftdruck;

Figur 6        das Modell zur Beschreibung der Radschwingungen;

Figur 7        die überlagerten Frequenzkurven nach dem Modell und den Werten aus den Raddrehzahlgebern;

Figuren 8 bis 10 -      Frequenzverläufe.

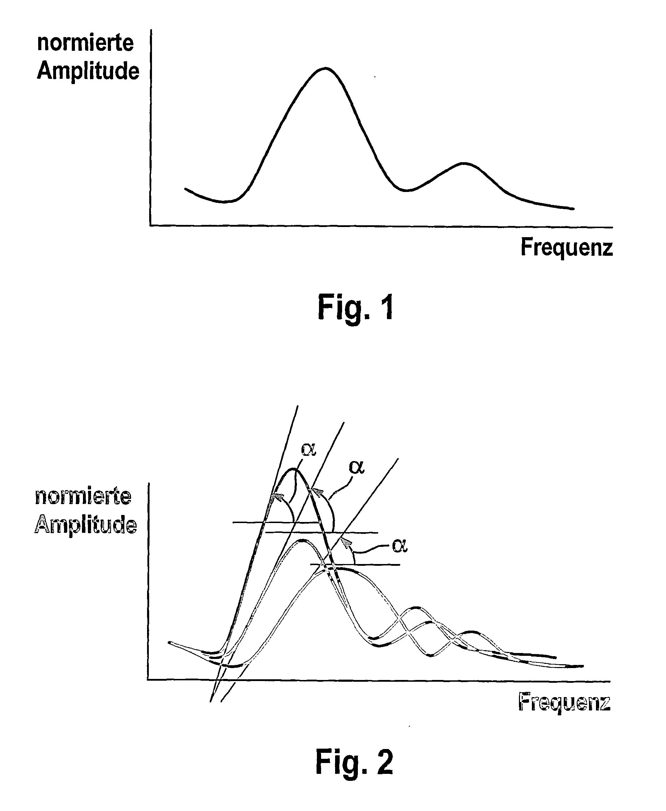

Das Eigenschwingverhalten eines Reifens kann aus den Signalen der Rad-Drehzahlgeber, wie sie in Antiblokkiersystemen verwendet werden, ermittelt werden. Hier zeigt die Darstellung nach Figur 1 die Abhängigkeit der logarithmisch aufgetragenen normierten Amplitude über der Frequenz. Die Ermittlung dieser Kurve ist in der US 6,385,553 oder in der DE 101 57 885 sehr ausführlich erläutert, so dass hierzu keine weiteren Ausführungen gemacht werden.

Mit fallendem Reifeninnendruck bewirken die vom Druck abhängigen Größen Dämpfung und Steifigkeit des Reifens eine relative Verstärkung der Anregung der Felge bei Frequenzen unterhalb der Resonanzfrequenz und eine Verminderung bei Frequenzen oberhalb der Resonanzfrequenz. Die Gradienten $\alpha$ der Verstärkung unter- und oberhalb der Resonanz lassen sich nach Auswertung der Raddrehzahlsignale (beispielsweise über Fouriertransformationen über ganzzahlige Anzahlen von Umdrehungen bei annähernd gleicher Geschwindigkeit) ermitteln und über einen Vergleich mit dem zuvor kalibrierten Soll-Zustand des Reifens bei Soll-Innendruck als Maß für einen möglichen Minderluftdruck verwenden. Die Gradienten $\alpha_{ist}$ und $\alpha_{soll}$ werden zueinander ins Verhältnis gesetzt. Liegt dieser Wert über einen definierten Zeitraum außerhalb gesetzter Toleranzwerte, erfolgt eine Warnung vor zu niedrigem Reifendruck.

Bei der Ermittlung der Resonanzfrequenz muss ein repräsentatives Amplitudenspektrum verwendet werden. Hierzu sind stationäre Fahrbedingungen festzustellen. Auch muss eine adäquate Auflösung der Frequenz sichergestellt sein. Eine hohe Anzahl von Mittlungen der ermittelten Werte geben eine gute Schätzung des Luftdrucks, berücksichtigen die Gewichtung von Straßenverhältnissen (schlecht Oberfläche, ebene Oberfläche) und lassen eine Normierung der Schwingungsidentität zu.

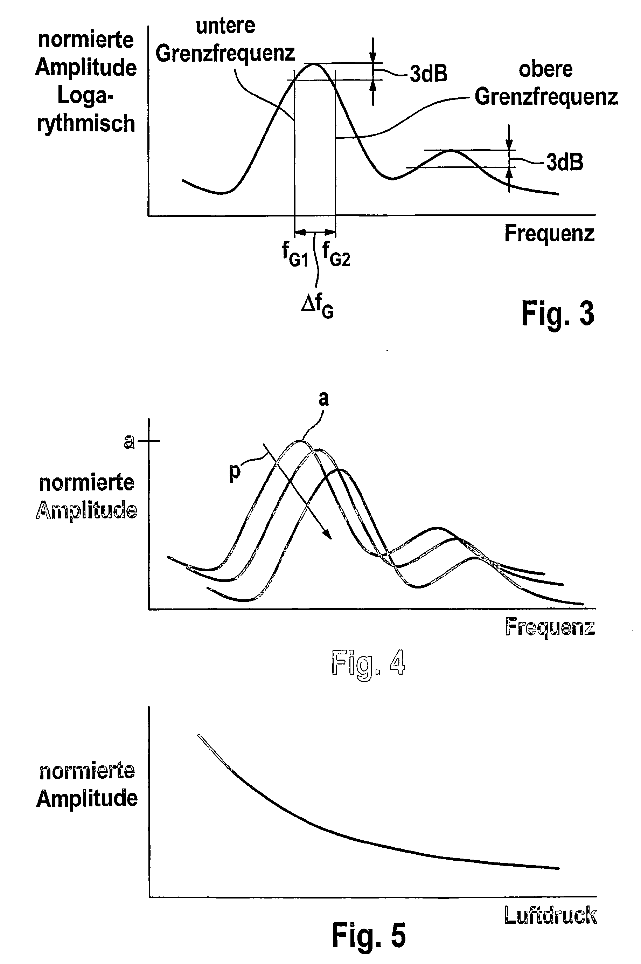

Figur 3 zeigt die 3dB-Grenzfrequenzen, die vom Amplitudenmaximum aus ermittelt werden. Aus der Differenz der oberen Grenzfrequenz $f_{G2}$ und der unteren Grenzfrequenz $f_{G1}$ wird die Differenzfrequenz $\Delta f_G$ ermittelt. Bei sinkendem Luftdruck verkleinert sich die Differenzfrequenz, da die normierte Amplitude steigt, was zu einer Stauchung der Frequenzkurve führt (vgl. Figur 2). Je kleiner die Differenzfrequenz wird, um so niedriger ist der Luftdruck. Sinkt die Differenzfrequenz unter einen vorgegebenen Wert für eine definierte Zeitspanne, wird ein Signal erzeugt, das den Minderluftdruck anzeigt.

Figur 4 ist entnehmbar, dass sich die Amplitude in Richtung niedriger Frequenzen verlagert, wenn der Reifeninnendruck sinkt. Gleichzeitig erhöht sich der Maximalwert der Amplitude. Das Maximum wird ermittelt und mit dem Soll-Wert vergleichen. Steigt der aktuell ermittelte Maximalwert über einen vorgegebenen Wert, wird das den Minderdruck anzeigende Signal erzeugt.

Die Lage der Grenzfrequenzen $f_{G1}$, $f_{G2}$, die Größe der Gradienten $\alpha_{soll}$, $\alpha_{ist}$ und der Wert der maximalen Amplituden $a_{soll}$, $a_{ist}$, ist neben dem Luftdruck von einer Vielzahl weiterer Parameter, wie beispielsweise dem Reifentyp und dem Abriebzustand abhängig. Das mit den vorgeschlagenen Verfahren arbeitende Reifendruckkontrollsystem muss deshalb kalibriert werden. Dabei wird ein Satz von Kalibrierungsparametern aufgenommen. Zum Auslösen der Initialisierung ist ein Initialisierungsmittel zu betätigen. Damit wird dem System dann mitgeteilt, dass alle Reifen korrekt befüllt sind. Vorzugsweise werden für unterschiedliche Geschwindigkeits- und Radmomentenbereiche eigene Kalibrierungsdatensätze aufgenommen. Immer wenn nach dem Betätigen des Initialisierungsmittels ein Geschwindigkeitsbereich das erste Mal gefahren wird, wird für diesen Bereich der Satz der Kalibrierparameter ermittelt.

Fremdeinflüsse, die die Lage der vorstehenden Werte beeinflussen, können kompensiert werden, wenn im Fahrzeug geeignete Messwerte zur Verfügung stehen. Diese können durch entsprechende Sensoren bestimmt werden. Aus dem Niveauregulierungssystem kann die Radlast bestimmt werden. Durch den Außentemperatursensor, gegebenenfalls in Verbindung mit einem Temperaturmodell für Reifen, kann die Temperatur berücksichtigt werden. Beschleunigungen und Verzögerungen des Fahrzeugs können über die ABS-Sensoren oder den Bremslichtschalter ermittelt werden. Aus der Motorsteuerung kann der Umgebungsluftdruck berücksichtigt werden. Die Profiltiefe kann durch Ermittlung des Abrollumfangs (zurückgelegte Wegstrecke/Raddrehzahl) ermittelt werden.

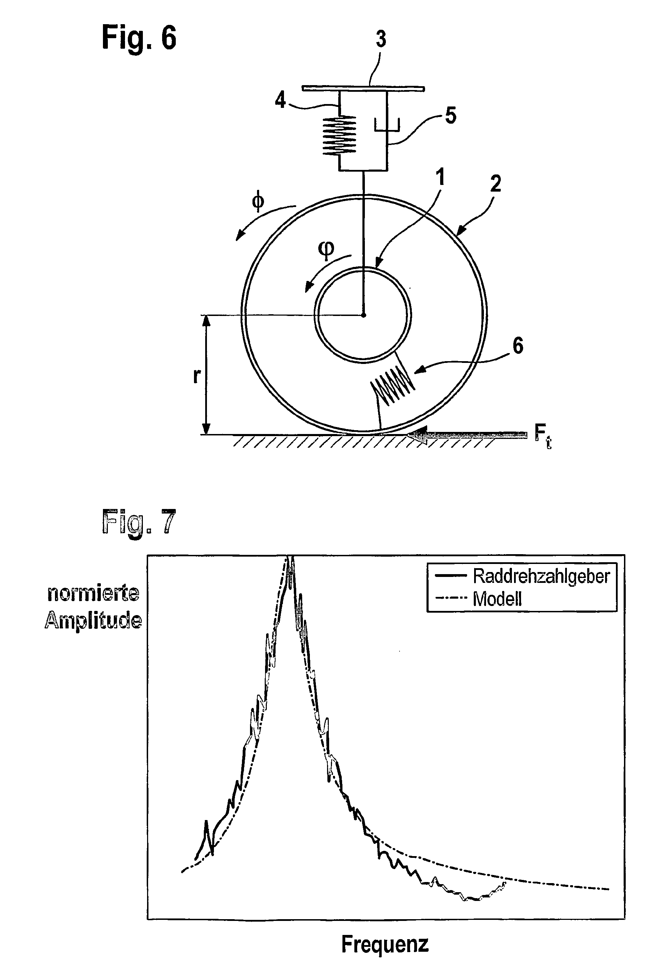

Figur 6 zeigt das Modell zur Ermittlung der Reifenschwingungen. Das Rad besteht aus der Felge 1 mit der Trägheit $J_F$ und dem Gürtel 2 mit der Trägheit $J_R$. Das Rad ist über die Radaufhängung mit der Federung 4 und der

EP 1 646 515 B1

Dämpfung 5 mit dem Aufbau 3 verbunden. Die Dämpfung der Drehschwingungen des Rades erfolgt über die Rotationsfeder-Dämpfereinheit 6, mit der Federkonstanten $c_s$ und der Dämpferkonstanten $d_s$. Die Aufbaufeder 4 weist die Federkonstante $c_a$ und der Aufbaudämpfer 5 die Dämpferkonstante $d_a$ auf. Der Gürtel 1 wird mit der Winkelgeschwindigkeit $\phi$ und die Felge 1 mit der Winkelgeschwindigkeit $\varphi$ bewegt. Die Anregung zur Schwingung erhält das Rad über die Straße mit der Kraft $F_t$.

Betrachtet man nur das Rad allein und vernachlässigt die Ankopplung des Rades an den Aufbau 3 über Federung 4 und Dämpfung 5, so lässt sich die Rotation von Reifen 1 und Felge 2 nach diesem Modell durch folgende Differentialgleichungen beschreiben:

$$J_F \cdot \overset{\circ\bullet\bullet}{\varphi} = \left( \Phi - \varphi \right) \cdot c_s + \left( \overset{\circ}{\Phi} - \overset{\bullet}{\varphi} \right) \cdot d_s$$

$$J_R \cdot \overset{\bullet\bullet}{\Phi} = -\left( \Phi - \varphi \right) \cdot c_s - \left( \overset{\bullet}{\Phi} - \overset{\bullet}{\varphi} \right) d_s + F_t \cdot R$$

Die Rotationssteifigkeit $c_s$ und die Rotationsdämpfung $d_s$ sind unter anderem sowohl vom Luftdruck p, dem Radaufhängungstyp als auch der Fahrgeschwindigkeit abhängig. Der dynamische Abrollradius r wird in diesem Ansatz durch einen konstanten Reifenradius R ersetzt.

Das obige Differentialgleichungssystem kann vorteilhaft und schnell mit einer Laplace-Transformation im Frequenzbereich gelöst werden. Zunächst wird das Differentialgleichungssystem in ein System erster Ordnung umgeschrieben:

$$y_1 = \varphi \qquad \overset{\bullet}{\gamma_1} = \overset{\bullet}{\varphi}$$

$$\gamma_2 = \overset{\bullet}{\gamma_1} \qquad \overset{\bullet}{\gamma_2} = \overset{\bullet\bullet}{\varphi} = \left( \Phi - \varphi \right)\frac{c_s}{J_F} + \left( \overset{\bullet}{\Phi} - \overset{\bullet}{\varphi} \right)\frac{d_s}{J_F}$$

$$\gamma_3 = \Phi \qquad \overset{\bullet}{\gamma_3} = \overset{\bullet}{\Phi}$$

$$\gamma_4 = \overset{\bullet}{\gamma_3} \qquad \overset{\bullet}{\gamma_4} = \overset{\bullet\bullet}{\Phi} = -\left( \Phi - \varphi \right)\frac{c_s}{J_R} - \left( \overset{\bullet}{\Phi} - \overset{\bullet}{\varphi} \right)\frac{d_s}{J_R} + \frac{F_t \cdot R}{J_R}$$

Umgeschrieben ergibt dieses das folgende Differentialgleichungssystem:

5

$$\overset{\circ}{\gamma}_1 = \gamma_2$$

$$\overset{\bullet}{\gamma}_2 = (\gamma_3 - \gamma_1)\frac{\overset{\bullet}{c_s}}{J_F} + (\gamma_4 - \gamma_2)\frac{d_s}{J_F}$$

$$\overset{\circ}{\gamma}_3 = \gamma_4$$

$$\overset{\circ}{\gamma}_4 = -(\gamma_3 - \gamma_1)\frac{c_s}{J_R} - (\gamma_4 - \gamma_2)\frac{d_s}{J_R} + \frac{F_t \cdot R}{J_R}$$

Dieses Differentialgleichungssystem wird nun einer Laplace-Transformation unterworfen. Dabei gilt:

$$\overset{\bullet}{\gamma}_i = s \cdot y_i \qquad i = 1,...,4$$

mit der komplexen Variablen s.

Dadurch erhält man aus dem linearen Differentialgleichungssystem ein lineares Gleichungssystem:

$$A * \begin{bmatrix} \gamma_1 \\ \gamma_2 \\ \\ \gamma_3 \\ \gamma_4 \end{bmatrix} = \begin{bmatrix} 0 \\ 0 \\ \\ 0 \\ \dfrac{F_t R}{J_R} \end{bmatrix}$$

mit

$$A = \begin{bmatrix} s & -1 & 0 & 0 \\ -\dfrac{c_S}{J_F} & -\dfrac{d_s}{J_F} - s & \dfrac{c_s}{J_F} & \dfrac{d_s}{J_F} \\ 0 & 0 & s & -1 \\ -\dfrac{c_s}{J_R} & -\dfrac{d_s}{J_R} & \dfrac{c_s}{J_R} & s + \dfrac{d_s}{J_R} \end{bmatrix} .$$

Sei

$$A^* = \begin{bmatrix} s & 0 & 0 & 0 \\ -\dfrac{c_s}{J_F} & 0 & \dfrac{c_s}{J_F} & \dfrac{d_s}{J_F} \\ 0 & 0 & s & -1 \\ -\dfrac{c_s}{J_R} & \dfrac{R}{J_R} & \dfrac{c_s}{J_R} & s+\dfrac{d_s}{J_R} \end{bmatrix}$$

setzt man nun

$$S = i\,\omega$$

($i^2 = -1$, $\omega =$ Kreisfrequenz)
und berücksichtigt man, dass

$$\gamma_2 = \dot{\varphi}$$

ist, so erhält man direkt den Frequenzgang, ohne $F_t$ angeben zu müssen:

$$G_{F_t}^{\dot{\varphi}} = \frac{\det(A^*)\cdot F_t}{\det(A)\cdot F_t} = \frac{\det(A^*)}{\det(A)}$$

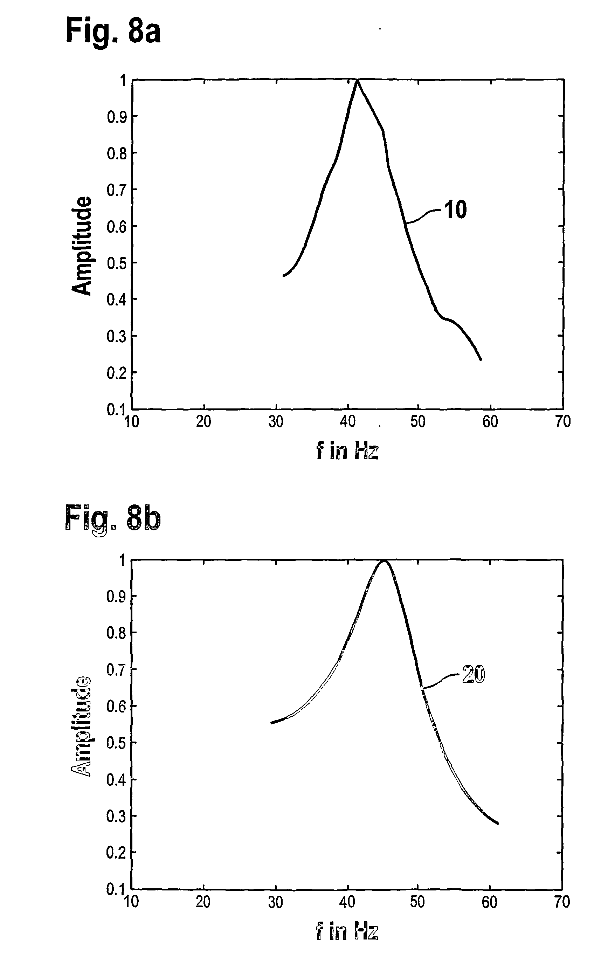

Durch das Reifenmodell ist es möglich, ohne aufwendige Messungen schnell und genau die Eigenfrequenz bestimmen zu können. Das ABS-Signal liefert das Frequenzspektrum der Felgendrehschwingung wie es gemessen wurde. Ein Beispiel eines gemessenen Frequenzspektrums 10 ist in der Figur 8a dargestellt. Ein zweites Frequenzspektrum 20 gemäß Figur 8b erhält man, indem ein Dirac-Impuls oder eine tangentiale Anregung $F_t$ auf das Modell angewendet wird, anhand dessen das Frequenzspektrum 20 des Modells in Abhängigkeit von den Modellparametern berechnet wird.

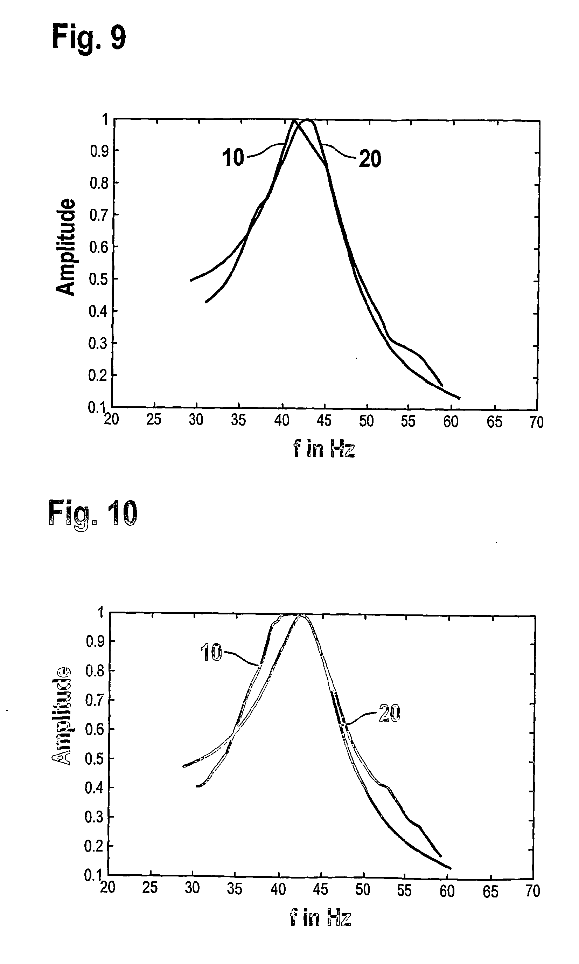

Durch die Variation der Parameter hinsichtlich der Rotationssteifigkeit $c_s$ und Rotationsdämpfung $d_s$ kann das Modell auf das gemessene Spektrum für eine bestimmte Geschwindigkeit und einen bestimmten Luftdruck des Reifens, z. B. durch Finden des Minimums der Summe der Fehlerquadrate zwischen Modell und gemessenen Spektrum, kalibriert werden, was in der Figur 9 dargestellt ist.

Über festgelegte Parameter $c_s$ für die Rotationssteifigkeit des Reifens und $d_s$ für die Rotationsdämpfung des Reifens wird der Reifen identifiziert und das Reifenmodell kann dazu benutzt werden, um den tatsächlichen Reifenluftdruck zu bestimmen. Dies erfolgt, indem das gemessene Frequenzspektrum durch Variationen des Luftdruckes innerhalb des Modells an das Modellfrequenzspektrum angepasst wird. Ein angepasster Frequenzverlauf ist in der Figur 10 dargestellt. Sobald eine hinreichend genaue Übereinstimmung zwischen dem gemessenen Frequenzspektrum 10 und dem Modellfrequenzspektrum 20 erreicht ist, ist der tatsächlich vorhandene Reifenluftdruck bestimmt und kann über ein Display ausgegeben werden. Alternativ kann bei Unterschreiten oder Überschreiten eines Grenzwertes eine Warnmeldung ausgegeben werden.

Alternativ zur expliziten Lösung des obigen Differentialgleichungssystems per Laplace-Transformation können empirische Lösungsfunktionen eingesetzt werde, die anpassbare Parameter enthalten. Zum Beispiel kann ein typisches Spektrum für das jeweilige Fahrzeug durch folgende Modellgleichung für die Amplitude

$$P = (ac_s + bd_s + e)^n$$

beschrieben werden, wobei die Konstanten a, b, e und n an das Fahrzeug angepasst werden müssen und n zwischen 0,3 und 0,9 liegen muss. Das Ergebnis dieser Bestimmung ist Figur 7 entnehmbar.

Die durchgezogene Linie zeigt das normierte Amplitudenspektrum des Raddrehzahlgeber, die Strich-Punkt-Linie das Ergebnis des Modells. Der Reifenluftdruck p wird aus den ermittelten Werten von Steifigkeit und Dämpfung $c_s$, $d_s$ durch Anpassung der gerechneten Modellkurven an gemessenen Kurven als Funktion $p=f(c_s, d_s)$ bestimmt.

Die Eliminierung von systematischen und stochastischen Störungen in dem Frequenzspektrum im Vorfeld der beschriebenen Verfahren zur Ermittlung des Innendrucks eines Fahrzeugreifens hat sich als sinnvoll herausgestellt, damit diese Störungen nicht zu falschen Ergebnissen hinsichtlich eines Reifendruckverlusts führen.

Folgende Typen von systematischen Störungen müssen aus dem Spektrum eliminiert werden:

1. radumdrehungssynchron anfallende Störungen, wie z. B. der Polteilungsfehler des Encoders zur Messung der Radgeschwindigkeit, allgemeine Reifen- und Felgenungleichförmigkeiten oder auch Einbautoleranzen
2. Störungen aufgrund von Vibrationen im Antriebsstrang, die nur an den angetriebenen Rädern auftreten
3. Störungen aufgrund von monofrequenten Anregungen der Straße

Zur Eliminierung dieser Störungen wird zunächst die Störfrequenz identifiziert und dann im Spektrum die zu dieser Frequenz gehörige Amplitude z. B. durch den Mittelwert der Amplituden der Nachbarfrequenzen ersetzt. Es empfiehlt sich dabei auch höhere Ordnungen dieser Störfrequenzen zu eliminieren. Störfrequenzen des Motors zeigen sich beispielsweise abhängig von der Bauart des Motors bei ganzzahligen Vielfachen der Motorgrundfrequenz sowie z. T. auch bei ganzzahligen Vielfachen der halben Motorgrundfrequenz.

Zur Identifikation der verschiedenen systematischen Störfrequenzen werden folgende Verfahren angewendet:

Zu (1): Störfrequenzen sind die Raddrehfrequenz und ihre ganzzahlige Vielfachen im relevanten Frequenzbereich.
Zu (2):

- Störfrequenz ist die Motordrehfrequenz, berechnet aus der Motordrehzahl vom Fahrzeugdatenbus, z. B. CAN, sowie ganzzahlige Vielfache der Motordrehfrequenz und der halben Motordrehfrequenz. Liegt die Information über den Motortyp z. B. auch auf dem Fahrzeugdatenbus oder kann dieser aus dort vorliegenden Informationen abgeleitet werden, so empfiehlt es sich, nur die für den jeweiligen Motortyp relevanten Ordnungen zu eliminieren
- Getriebedrehfrequenzen, berechnet aus der Raddrehzahl (ggf. auch der Motordrehzahl) und den Übersetzungverhältnissen/Zähnezahlen

Zu (3): Störfrequenzen, die von der Straße angeregt werden, sind am Vorder- und Hinterrad der gleichen Fahrzeugseite erkennbar. Durch einen Vergleich der Spektren von Vorder- und Hinterrad für zeitgleich ermittelte Signale können diese identifiziert werden.

Ergebnis dieses Verfahrensschritts ist ein um die systematischen Störungen bereinigtes ungefiltertes Frequenzspektrum z. B. in Form der spektralen Leistungsdichte.

Grundsätzlich ist anzumerken, dass es erheblich einfacher ist, diese systematischen Störungen im Frequenzbereich zu eliminieren als bereits schon im Zeitbereich.

Zur Eliminierung von stochastischen Störungen werden die Spektren über einen längeren Zeitraum gemittelt bzw. es wird ein gefiltertes Frequenzspektrum berechnet. Hierbei werden an ein einzelnes ungefiltertes Spektrum bestimmte Güteanforderungen gestellt, z. B. Mindestenergieinhalt (da Eigenschwingung auf sehr glatten Straßen kaum ausgeprägt ist), Ausgeprägtheit des Peaks, etc.

Für den Fall, dass diese Anforderungen nicht erfüllt sind, wird dieses Spektrum nicht für die Berechnung des mittleren bzw. gefilterten Spektrums herangezogen.

**Patentansprüche**

1. Verfahren zur Ermittlung des Innendrucks, insbesondere des Minderdrucks des Fahrzeugreifens eines Kraftfahrzeuges im Fahrbetrieb durch Analyse des Eigenschwingverhaltens des Rades, wobei aus dem ermittelten Schwingungsspektrum die Amplitudenmaxima der Resonanzfrequenz beobachtet werden, **gekennzeichnet durch** folgende Schritte:

    a) Ermittlung und Aufzeichnung der Resonanzfrequenz des Rades mit einem vorgegebenen Soll-Druck,
    b) Ermitteln und Speichern des maximalen Amplitudenwertes $a_{soll}$ bei Soll-Druck des Reifens,
    c) kontinuierliches Ermitteln der Resonanzfrequenz des Rades im Fahrbetrieb,
    d) kontinuierliches Ermitteln des maximalen Amplitudenwertes $a_{ist}$,
    e) kontinuierliches Vergleichen der maximalen Amplitudenwerte $a_{soll}$ und $a_{ist}$ miteinander,
    f) Erzeugen eines Signals, wenn die Abweichung von $a_{ist}$ zu $a_{soll}$ einen definierten Wert überschreitet.

2. Verfahren nach einem der Ansprüche 1, **dadurch gekennzeichnet, dass** das Signal erst erzeugt wird, wenn die Abweichung den definierten Wert über einen festgelegten Zeitraum überschreitet.

3. Verfahren nach Anspruch 1, **dadurch gekennzeichnet, dass** der maximale Amplitudenwert $a_{soll}$ bei Soll-Druck für einen speziellen Reifentyp extern ermittelt und auf einem mit dem Reifen verbindbaren Speichermedium gespeichert wird.

4. Verfahren nach Anspruch 3, **dadurch gekennzeichnet, dass** das Speichermedium ein Transponder ist.

5. Verfahren nach nach Anspruch 3, **dadurch gekennzeichnet, dass** das Speichermedium ein Barcode ist.

6. Verfahren nach einem der Anspruch 1, **dadurch gekennzeichnet, dass** bei der Auswertung der Frequenzkurve im Fahrbetrieb durch die Last, die Temperatur, die Feuchtigkeit, den Umgebungsluftdruck und/oder die Fahrzeugbeschleunigung hervorgerufene Fremdeinflüsse kompensiert werden.

7. Verfahren nach Anspruch 1, **dadurch gekennzeichnet, dass** bei der Auswertung der Frequenzkurve im Fahrbetrieb die Profiltiefe des Reifens berücksichtigt wird.

8. Verfahren nach Anspruch 1, **dadurch gekennzeichnet, dass** mit Hilfe eines Initialisierungsmittels am fahrenden Kraftfahrzeug eine von der Kraftfahrzeuggeschwindigkeit abhängige Kalibrierung durchgeführt wird.

9. Verfahren nach Anspruch 1, **dadurch gekennzeichnet, dass** die Umrechnung vom Zeitbereich in den Frequenzbereich über Tabellen erfolgt.

10. Verfahren nach Anspruch 1, **dadurch gekennzeichnet, dass** über die Lage der maximalen Amplitudenwerte $a_{ist}$ die Reifendimension erkannt wird.

11. Verfahren nach einem oder mehreren der vorstehenden Ansprüche, **gekennzeichnet durch** die Kopplung mit einem indirekten System zur Erkennung des Mindestluftdrucks.

12. Verwendung des Verfahrens nach Anspruch 1 in einem direkten und/oder indirekten Reifendrucküberwachungssystem.

**Claims**

1. Method for determining the internal pressure, in particular the reduced pressure, of the vehicle tyre of a motor vehicle while driving by analysing the natural oscillation behaviour of the wheel, the amplitude maxima of the resonant frequency being observed from the oscillation spectrum determined, **characterized by** the following steps of:

    a) determining and recording the resonant frequency of the wheel with a predefined desired pressure,
    b) determining and storing the maximum amplitude value $a_{sol}$ at the desired pressure of the tyre,
    c) continuously determining the resonant frequency of the wheel while driving,
    d) continuously determining the maximum amplitude value $a_{ist}$,

e) continuously comparing the maximum amplitude values $a_{soll}$ and $a_{ist}$ with one another,

f) generating a signal if the difference between $a_{ist}$ and $a_{soll}$ exceeds a defined value.

2. Method according to Claim 1, **characterized in that** the signal is generated only if the difference exceeds the defined value over a set period of time.

3. Method according to Claim 1, **characterized in that** the maximum amplitude value $a_{soll}$ at the desired pressure is externally determined for a special type of tyre and is stored on a storage medium which can be connected to the tyre.

4. Method according to Claim 3, **characterized in that** the storage medium is a transponder.

5. Method according to Claim 3, **characterized in that** the storage medium is a barcode.

6. Method according to Claim 1, **characterized in that** extraneous influences caused by the load, the temperature, the humidity, the ambient air pressure and/or the vehicle acceleration are compensated for when evaluating the frequency curve while driving.

7. Method according to Claim 1, **characterized in that** the profile depth of the tyre is taken into account when evaluating the frequency curve while driving.

8. Method according to Claim 1, **characterized in that** calibration which is dependent on the motor vehicle speed is carried out with the aid of an initialization means on the moving motor vehicle.

9. Method according to Claim 1, **characterized in that** the conversion from the time domain to the frequency domain is carried out using tables.

10. Method according to Claim 1, **characterized in that** the tyre dimension is discerned from the position of the maximum amplitude values $a_{ist}$.

11. Method according to one or more of the preceding claims, **characterized by** the coupling to an indirect system for detecting the minimum air pressure.

12. Use of the method according to Claim 1 in a direct and/or indirect tyre pressure monitoring system.

**Revendications**

1. Procédé de détermination de la pression interne, notamment de la pression minimale du pneumatique d'un véhicule automobile en déplacement par l'analyse du comportement oscillant propre de la roue, les crêtes d'amplitude de la fréquence de résonance étant observées à partir du spectre d'oscillation déterminé, **caractérisé par** les étapes suivantes :

a) détermination et enregistrement de la fréquence de résonance de la roue avec une pression de consigne prédéfinie,

b) détermination et mémorisation des valeurs maximales de l'amplitude $a_{soll}$ à la pression de consigne du pneumatique,

c) détermination continue de la fréquence de résonance de la roue en déplacement,

d) détermination continue de la valeur maximale de l'amplitude $a_{ist}$,

e) comparaison continue des valeurs maximales de l'amplitude $a_{soll}$ et $a_{ist}$ entre elles,

f) génération d'un signal lorsque l'écart entre $a_{ist}$ et $a_{soll}$ dépasse une valeur définie.

2. Procédé selon la revendication 1, **caractérisé en ce que** le signal n'est généré que lorsque l'écart dépasse la valeur définie pendant une période donnée.

3. Procédé selon la revendication 1, **caractérisé en ce que** la valeur maximale de l'amplitude $a_{soll}$ est déterminée extérieurement à la pression de consigne pour un type de pneumatique spécial et mémorisée sur un support de mémorisation qui peut être relié avec le pneumatique.

**4.** Procédé selon la revendication 3, **caractérisé en ce que** le support de mémorisation est un transpondeur.

**5.** Procédé selon la revendication 3, **caractérisé en ce que** le support de mémorisation est un code à barres.

**6.** Procédé selon la revendication 1, **caractérisé en ce que** lors de l'interprétation de la courbe de fréquence en déplacement, les influences externes provoquées par la charge, la température, l'humidité, la pression atmosphérique et/ou l'accélération du véhicule sont compensées.

**7.** Procédé selon la revendication 1, **caractérisé en ce que** la profondeur du profilé du pneumatique est prise en compte lors de l'interprétation de la courbe de fréquence en déplacement.

**8.** Procédé selon la revendication 1, **caractérisé en ce qu'**un calibrage dépendant de la vitesse du véhicule est effectué sur le véhicule en déplacement à l'aide d'un moyen d'initialisation.

**9.** Procédé selon la revendication 1, **caractérisé en ce que** la conversion de la plage de temps en la plage de fréquences s'effectue par le biais de tableaux.

**10.** Procédé selon la revendication 1, **caractérisé en ce que** la dimension du pneumatique est détectée par le biais de la position de la valeur maximale de l'amplitude $a_{ist}$.

**11.** Procédé selon une ou plusieurs des revendications précédentes, **caractérisé par** l'accouplement avec un système indirect de détection de la pression d'air minimale.

**12.** Utilisation du procédé selon la revendication 1 dans un système de surveillance directe et/ou indirecte de la pression des pneumatiques.

normierte
Amplitude

Frequenz

## Fig. 1

normierte
Amplitude

$\alpha$

$\alpha$

$\alpha$

Frequenz

## Fig. 2

Fig. 3

Fig. 4

Fig. 5

## Fig. 6

## Fig. 7

normierte
Amplitude

| —— Raddrehzahlgeber |
| ---- Modell |

Frequenz

# Fig. 8a

# Fig. 8b

## Fig. 9

## Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6450020 B1
- DE 10157858 A1
- JP 5133831 A
- JP 8219920 A
- US 6385553 B
- DE 10157885